(19) Europäisches Patentamt

European Patent Office

Office européen des brevets

(11) EP 1 434 337 A1

(12) **EUROPEAN PATENT APPLICATION**

(43) Date of publication:
30.06.2004 Bulletin 2004/27

(51) Int Cl.$^7$: **H02M 3/158**

(21) Application number: 02028953.4

(22) Date of filing: 24.12.2002

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(71) Applicant: **Becromal S.p.A.**
**I-20089 Quinto de' Stampi Rozzano (MI) (IT)**

(72) Inventors:
• **Pitacco, Andrea**
**20099 Sesto San Giovanni, Milano (IT)**
• **Serlenga, Paolo**
**20092 Cinisello Balsamo, Milano (IT)**

(74) Representative: **KEIL & SCHAAFHAUSEN**
**Patentanwälte,**
**Cronstettenstrasse 66**
**60322 Frankfurt am Main (DE)**

(54) **Power supply having a dc/dc-converter**

(57)     The invention relates to a power supply having a dc/dc-converter (4) with a chopper-module (8) having an output inductor (L), a capacitor (C), a diode (D) and a semiconductor (Q) and creating ON- and OFF-states wherein during the ON-state the input voltage is applied to the inductor (L) and during the OFF-state the inductor current is flowing through Diode (D). The dc/dc-converter (4) has at least two chopper-modules (8) being connected in parallel to a holder inductor (12) and working with a phase shift relative to each other.

Fig. 1

EP 1 434 337 A1

## Description

The invention relates to a power supply having a dc/dc-converter with a chopper-module having an inductor, a capacitor, a diode and a semiconductor and creating ON- and OFF-states wherein during the ON-state the input voltage is applied to the inductor and during the OFF-state the inductor current is flowing through the diode.

Basic switching power supplies are known in the buck topology having a non-isolated configuration, i.e. input and output have a common reference voltage. The buck power stage is very common and simple and it is known also as step-down power stage because the output voltage is always lower than the input voltage. The relation between input and output voltages depends only on the duty cycle of the chopper and for this reason the choice of the inductor value is the most important step on dimensioning the power stage in the buck converter topology. However, high inductor values for achieving high output values require, even if theoretically possible, inductors having large dimension and high weight leading in the consequence to high costs. Further, in order to increase the power level and of course also the voltage level there are problems with the maximum working frequency and maximum voltage and current ratings as heat dissipation and snubber configuration become the most important aspects to be solved.

It is the object of the invention to present a power supply with an effective dc/dc-converter as mentioned at the beginning allowing a reduced inductor size to minimize weight and costs of the power supply having further better performance.

This object is solved with the features of claim 1. By providing at least two chopper-modules in the dc/dc-converter being connected in parallel to a holder inductor and working with a phase shift relative to each other, a multiphase switching power supply is achieved. In this case many different chopper-modules work in parallel but with a different synchronization clock or shift phase. The system is based on a single holder inductor. Each phase generated by means of a single chopper-module contributes in term of energy balancing to the output current. This current is accordingly obtained by means of the sum of many different phases of the plurality of chopper-modules. Each chopper-module feds the holder inductor during its own phase. If the nominal frequency is considered to be f, this means that each module works at a lower frequency value depending on the chopper-module number n. The result is a lower working frequency f/n. This solution permits to reach many different benefits and improvements. The whole system operates at a very high output frequency meanwhile each module works at a lower level reducing switching and on state losses. The output frequency becomes very high and the most important physical consequences are small sizes of the power supply components as inductor, capacitors and of course semiconductors.

In the preferred medium power range, the chopper-modules are working with a frequency from 5 to 40 kHz and the number of chopper-modules is between 2 to 8. The system can be designed for low output ranges from e.g. 5 to 48 Vdc, but it can also be developed for a higher voltage level. The physical limit is connected to the maximum voltage rating of the semiconductors available. In the case of a lower voltage range it is also possible to switch to higher frequency.

In a preferred embodiment of the invention, the power supply contains a control circuit for driving the semiconductor and determining the ON/OFF-ratio of the chopper-module. This allows a flexible adaptation to different fields of application by simply changing some parameter of the dc/dc-converter.

In order to allow a continuous conduction mode the time (T) of one switching cycle is equal to the sum of the time of the ON-state ($T_{on}$) and the time of the OFF-state ($T_{off}$).

Advantageously, the inductor and the capacitor build an output filter having a cut off frequency less than the switching frequency of the phase shift switching. The filter further attenuates all frequencies above the switching frequency.

In preferred embodiments, the semiconductor is an IGBT-semiconductor, the diode is a free-wheeling diode and/or the capacitor is an aluminium electrolytic capacitor. These electronic components are reliable and cheap and therefore well adapted for the use in the power supply according to the present invention.

Following, a preferred embodiment of the present invention is described with reference to the drawing. Besides, further features and advantages of the present invention are mentioned in the description.

It shows

Fig. 1    a block diagram of the power supply according to the present invention;

Fig. 2    a block diagram of one chopper-module and

Fig. 3    the main wave forms of a buck converter.

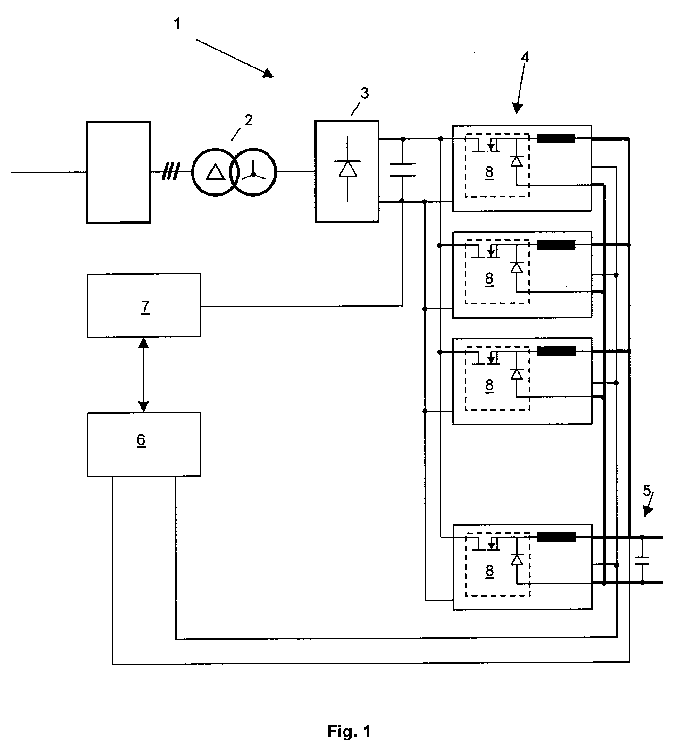

The power supply 1 as presented in Fig. 1 has an ac-power supply 2 being followed by an ac/dc-converter 3, that might be a normal rectifier. It is followed by a dc/dc-converter 4 to adjust the output voltage to the desired level. The power supply 1 is connected via output 5 to a load not shown. The dc/dc-converter 4 is controlled by a control- and interface-modul 6 and an alarm- and bias-modul 7.

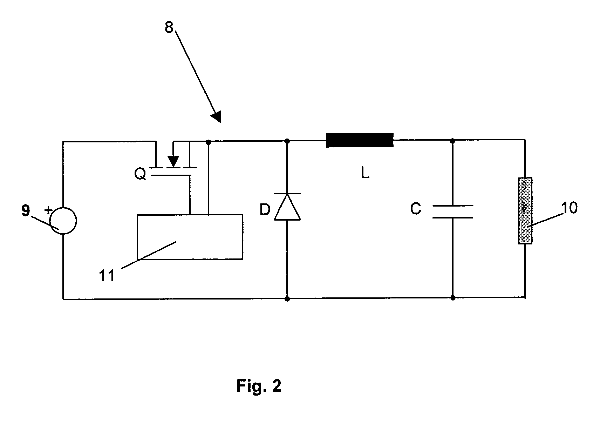

The dc/dc-converter 4 contains several chopper-modules 8 each of which is connected to the control- and interface-module 6 having the respective control software. The structure and the functioning of each chopper-module 8 is in the following described with respect to Fig. 2.

A chopper-module 8 contains a IGBT-semiconductor Q connected to the input voltage supply 9 and a free-wheeling diode D as well as to an output holder inductor L. The diode D is connecting the two poles of the input voltage supply 9. A capacitor C, typically an aluminium electrolytic capacitor, is also connected between the two poles of the input voltage supply 9. The inductor L and the capacitor C build an output filter where the equivalent series resistance (ESR) of the capacitor C is an import parameter of the filter. The output of the chopper-module 8 is connected in parallel to the outputs of the other chopper-modules 8 to be connected to a load 10.

A control circuit 11 drives the semiconductor Q and determines thus the ON/OFF-ratio (duty cycle) to obtain the desired output voltage. The duty cycle value establishes the minimum and the maximum voltage that can be obtained. Further, the LC-value is very critical because it determines the maximum output current on the power stage that can operate in continuous or discontinuous mode. The difference is in the inductor current mode that can flowing continuously during the switching cycle or being zero for a certain portion of the cycle. This difference can have important consequences on the frequency response so that the choice of the inductor value is fundamental.

During the ON-state the input voltage is applied to the inductor L. Diode D is non-conductive during this time because it is reverse biased. The voltage applied to the load 10 is the output voltage. The inductor current flows from the input voltage supply 9 to the output capacitor C and the load 10. Thus, during the ON-state the inductor current increases as a result of the applied voltage

$$V_L = L \times dI/dt.$$

For the current the relation

$$\Delta I = (V_{in} - V_{out}) \times T_{on}/L$$

is valid, where $\Delta I$ is the inductor current ripple.

Since the current flowing in the inductor L cannot change instantaneously the current $I_Q$ shifts from the semiconductor Q to the diode D as current $I_D$. As the inductor current decreases the voltage across the inductor L reverses polartity until the diode D is forward biased and turned ON. The inductor current then flows from ground through diode D and to the output capacitor C and load 10. The value of the voltage $V_L$ applied across the inductor L is constant during the OFF-state and opposite in polarity with respect to the applied voltage $V_L$ during the ON-state. In this state the inductor current decreases linearly. The inductor current ripple $+\Delta I$ during the ON-time $T_{on}$ must be equal to the current ripple $-\Delta I$ during OFF-time $T_{off}$. It is necessary that the sum $T_{on} + T_{off}$ is equal to the switching cycle T for the continuous conduction mode.

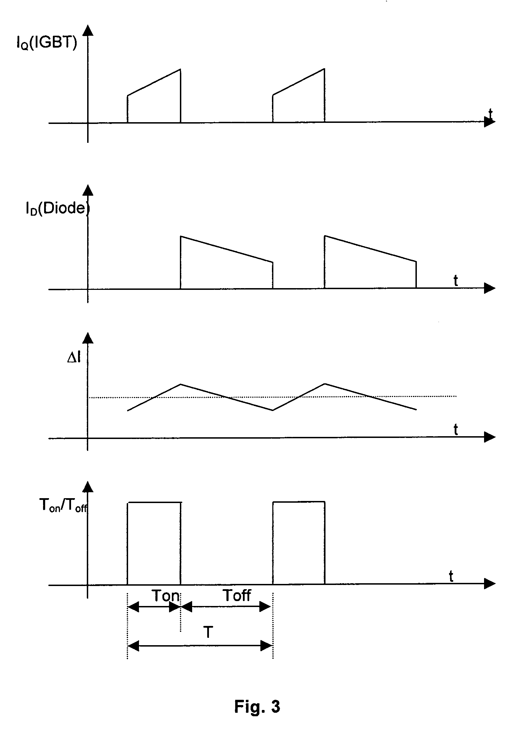

The typical waveforms for the continuous mode of the buck converter are shown in Fig. 3. The waveform seen by the holder inductor L is a superposition of the diagrams showing $I_Q$ and $I_D$. In the case of only one chopper-module 8 the frequency f of the chopper-module 8 must be very high. Therefore, according to the invention, the dc/dc-converter 4 contains n chopper-modules 8 that are phase shifted in a way that the superposition of all chopper-modules 8 create the current and voltage at the holder inductor L having the superimposed frequency f. Each of the copper-modules 8, however, operates only with the reduced frequency f/n and shifted in phase relative to the other chopper-modules 8. Thus, the mulit-phase switching power supply according to the present invention allows to reduce the size of the inductors L.

In Fig. 3 it was assumed that the dc output voltage is constant without ac-ripple. This means that the output capacitor C is very important from ESR point of view and value. The relation between voltage input and output is given by the duty cycle, i.e. if the duty cycle changes the output voltage changes in the same ratio.

Accordingly, in the buck power stage configuration the inductor value is important because dimension, weight and size of the inductor L determine the highest current level of the power supply 1. To maintain continuous conduction mode, especially in an application, where a single input voltage or dc power stage is fed to several outputs with different values of voltage and current, it is necessary to know the critical current level that depends on the current ripple $\Delta I$. To establish the minimum value of inductor it is important to have the maximum input voltage and the highest working frequency. This can be obtained by a high switching frequency between the plurality of the chopper-modules 8 according to the invention.

Thus, the multi phase switching power supply 1 allows to reduce the size and weight of the inductor L. It is very successful even in cases where a high current level is needed and the input voltage is spread over a wide range. It is possible to employ the adapted size of semiconductors Q thereby reducing losses. Depending on the level the multi-phase solution according to the invention can provide for a different number of channels. Thus, a very large flexibility on the power supply is achieved regarding the input/output ratio and the current level.

**Reference signs:**

1      power supply
2      ac-power supply
3      ac/dc-converter
4      dc/dc-converter

| | |
|---|---|
| 5 | output |
| 6 | control- and interface-module |
| 7 | alarm- and bias-module |
| 8 | chopper-modules |
| 9 | input voltage supply |
| 10 | load |
| 11 | control circuit |
| | |
| Q | semiconductor |
| D | diode |
| L | holder inductor |
| C | capacitor |
| $I_Q$ | semiconductor current |
| $I_D$ | diode current |
| $\Delta I$ | inductor current ripple |
| $T_{on}$ | time of ON-state |
| $T_{off}$ | time of OFF-state |
| T | time of switching cycle |

**Claims**

1. Power supply having a dc/dc-converter (4) with a chopper-module (8) having an output inductor (L), a capacitor (C), a diode (D) and a semiconductor (Q) and creating ON- and OFF-states wherein during the ON-state the input voltage is applied to the inductor (L) and during the OFF-state the inductor current is flowing through Diode (D), **characterized in that** the dc/dc-converter (4) has at least two chopper-modules (8) being connected in parallel to a holder inductor (12) and working with a phase shift relative to each other.

2. Power supply according to claim 1, **characterized in that** the chopper-modules (8) are working with a frequency from 5 to 40 kHz.

3. Power supply according to claim 1 or 2, **characterized in that** the number of chopper-modules (8) is between 2 to 8.

4. Power supply according to any of the proceeding claims, **characterized by** a control circuit (11) for driving the semiconductor (Q) and/or determining the ON/OFF-ratio of the chopper-module (8).

5. Power supply according to any of the proceeding claims, **characterized in that** the time (T) of one switching cycle is equal to the sum of the time of the ON-state ($T_{on}$) and the time of the OFF-state ($T_{off}$).

6. Power supply according to any of the proceeding claims, **characterized in that** the inductor (L) and the capacitor (C) build an output filter having a cut off frequency less than the switching frequency of the phase shift switching.

7. Power supply according to any of the proceeding claims, **characterized in that** the semiconductor (Q) is an IGBT-semiconductor.

8. Power supply according to any of the proceeding claims, **characterized in that** the diode (D) is a free-wheeling diode.

9. Power supply according to any of the proceeding claims, **characterized in that** the capacitor (C) is an aluminium electrolytic capacitor.

**Fig. 1**

5

**Fig. 2**

**Fig. 3**

**European Patent Office**

## EUROPEAN SEARCH REPORT

Application Number

EP 02 02 8953

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 227 570 A (SMA REGELSYSTEME GMBH) 31 July 2002 (2002-07-31) * the whole document * --- | 1-9 | H02M3/158 |
| X | FR 2 790 616 A (SAGEM) 8 September 2000 (2000-09-08) * the whole document * --- | 1,3-9 | |
| X | MUTO M ET AL: "High-performance power supply using IGBT for synchrotron magnets" PARTICLE ACCELERATOR CONFERENCE, 1999. PROCEEDINGS OF THE 1999 NEW YORK, NY, USA 27 MARCH-2 APRIL 1999, PISCATAWAY, NJ, USA,IEEE, US, 27 March 1999 (1999-03-27), pages 3770-3772, XP010349106 ISBN: 0-7803-5573-3 * page 3770 * * page 3771, column 2 * ----- | 1-3,6,8 | |
| | | | **TECHNICAL FIELDS SEARCHED (Int.Cl.7)** |
| | | | H02M |

The present search report has been drawn up for all claims

| Place of search | Date of completion of the search | Examiner |
|---|---|---|
| THE HAGUE | 14 August 2003 | Marannino, E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**EP 1 434 337 A1**

## ANNEX TO THE EUROPEAN SEARCH REPORT
## ON EUROPEAN PATENT APPLICATION NO.

EP 02 02 8953

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2003

| Patent document cited in search report | | Publication date | Patent family member(s) | | Publication date |
|---|---|---|---|---|---|
| EP 1227570 | A | 31-07-2002 | DE | 10103633 A1 | 29-08-2002 |
| | | | EP | 1227570 A2 | 31-07-2002 |
| FR 2790616 | A | 08-09-2000 | FR | 2790616 A1 | 08-09-2000 |

For more details about this annex : see Official Journal of the European Patent Office, No. 12/82